# EUROPEAN PATENT APPLICATION

(11) **EP 1 793 567 A2**
(43) Date of publication of application: **06.06.2007**
(21) Application number: 06125017.1
(22) Date of filing: 29.11.2006
(51) Int. Cl.: H04M 1/02, H04M 1/725

(54) **Rotatable mobile information terminal with several operation modes and method of controlling the same**

(30) Priority: 30.11.2005 JP 2005345898
(71) Applicant: Sony Ericsson Mobile Communications Japan, Inc., Tokyo (JP)
(72) Inventor: Sano, Tatsuya, 1-8-15, Konan Minato-ku Tokyo (JP); Mukae, Ryoji, 1-8-15, Konan Minato-ku Tokyo (JP)
(74) Representative: Körber, Martin Hans

(57) **Abstract**

A mobile information terminal apparatus (1) including a first case (11) including a display portion (12), a second case (10), and a rotary support mechanism (30) for supporting the first case and the second case such that the first case (11) is horizontally rotatable with respect to the second case (10) and the first case (11) takes at least a first position and a second position different from the first position, in which the shapes of the mobile information terminal apparatus (1) at the first position and the second position are substantially identical. Thus key operability, especially that for performing entertainment functions represented by gaming function, is improved and usability of the apparatus is enhanced.

## Description

### CROSS REFERENCES TO RELATED APPLICATIONS

The present invention contains subject matter related to Japanese Patent Application JP 2005-345898 filed in the Japanese Patent Office on November 30, 2005, the entire contents of which being incorporated herein by reference.

### BACKGROUND OF THE INVENTION

### 1. Field of the Invention

The present invention relates to a mobile information terminal apparatus and, more particularly, relates to a mobile information terminal apparatus including a mechanism for a rotatable liquid crystal display.

### 2. Description of the Related Art

A mobile phone terminal has been provided with a phone function to make a phone conversation with another phone terminal (including both a mobile phone and a fixed-line phone) and an electronic mail function to exchange electronic mails with another mobile phone, personal computer, or the like. Some of mobile phone terminals are provided with such entertainment functions as a game function allowing a game to be played according to a preinstalled game program or a game program downloaded from a server over the network, a digital camera function, and a television function.

However, there are only few of mobile phone terminals configured to provide good operability in performing a plurality of such entertainment functions. Particularly, there are rarely found those designed to provide good operability in performing a game function. For example, the key arrangement on an ordinary mobile phone like a stick type mobile phone is usable only when the phone is held by one hand; therefore, its operability in the game mode is far from being excellent. Even in the case of the mobile phone adapted to be usable with the phone held by both hands, it is arranged such that some keys, which are rarely used in the normal mode, are used in the mode to play a game. Since users are not accustomed to use of such keys, this type of phone can hardly be said to have excellent operability in performing the game function.

To eliminate the above mentioned disadvantages, a mobile phone disclosed in Japanese Patent Unexamined Publication No. 2003-134214 (Patent Publication 1) is arranged to allow various keys to be operated by using both thumbs, with the phone held by both hands. More specifically, in a so-called "foldable" mobile phone, its operating portion (upper case) having keys arranged thereon is pivotally supported on a lower case, lying thereunder, so that the key operating portion may be rotated 90° when a game is played thereby improving the operability of the keys.

### SUMMARY OF THE INVENTION

In the mobile phone disclosed in the Patent Publication 1, the shape of the apparatus when used for playing a game becomes much different from the case where it is normally used. Therefore, when the key operation is made while the phone is used for playing a game with only the lower case held by both hands, the holding stability may be lessened. Further, even if the key operating portion is rotated 90°, the distance between both hands is not large enough. Thus, there still remains a necessity for improvement in the operability of the key on the mobile phone when it is used for playing a game.

The present invention has been made with the foregoing background in mind and therefore it is desired to provide a mobile information terminal apparatus capable of improving the key operation thereby enhancing the operability of the apparatus especially in performing the entertainment functions, as represented by the game function, and also to provide a control method of the apparatus.

According to an embodiment of the present invention, there is provided a mobile information terminal apparatus including a first case including a display portion, a second case, and a rotary support mechanism configured to support the first case and second case such that the first case is horizontally rotatable with respect to the second case and the first case takes at least a first position and a second position different from the first position, in which the shapes of the mobile information terminal apparatus at the first position and the second position are substantially identical.

The first case has a portion of the operating keys of the mobile information terminal apparatus disposed thereon and, when the first case takes the second position, the above referred portion of the operating keys and the rest of the operating keys come to be located at both left and right end portions, respectively, in the longitudinal direction of the mobile information terminal apparatus, so that the mobile information terminal apparatus becomes operable by both hands.

The mobile information terminal apparatus further includes a position detector for detecting the position of the first case and a controller responsive to the result of detection made by the position detector for controlling the function of the mobile information terminal apparatus, in which the controller may change the function of the mobile information terminal apparatus depending on whether the first case is at the first position or at the second position.

Further, the rotary support mechanism may allow the first case to take a third position between the first and second positions and the controller may change the function of the mobile information terminal apparatus depending on whether the first case is at the first, second, or third position.

The controller provides phone and/or electronic mail function when the first case is at the first position, while the controller provides game and/or camera function when the first case is at the second position.

Further, the controller provides TV or video function when the first case is at the third position.

Numeric keys including 0 to 9, at least, are disposed on the second case and arrow keys and a decision key, at least, are disposed on the first case. The controller may change the roles of the numeric keys, the arrow keys, and the decision key depending on the position of the first case.

The numeric keys are made up of ordinary numeric keys and special numeric keys. The special numeric keys are formed to be larger and higher than the ordinary numeric keys.

In particular, the special numeric keys are arranged to surround at least one ordinary numeric key and have their keytops provided with a down slope portion toward the surrounded ordinary numeric key.

When the first case is placed at the second position and both the game and camera functions are rendered operable, the controller switches between the game mode and the camera mode depending on whether or not a long time depression has been made on a predetermined key.
A zoom key used in the camera mode may be used as an L key in the game mode, while a shutter key used in the camera mode may be used as an R key in the game mode.

A control method according to an embodiment of the present invention employs a mobile information terminal apparatus including a first case having a display portion, a second case, and a rotary support mechanism for supporting the first case and the second case such that the first case is horizontally rotatable with respect to the second case and the first case takes at least a first position and a second position different from the first position, in which the shapes of the mobile information terminal apparatus at the first position and at the second position are substantially identical; the control method includes the steps of: detecting the position of the first case; and controlling functioning of the mobile information terminal apparatus depending on results of detection in the step of detecting the position, in which, at the controlling step, functioning of the mobile information terminal apparatus is controlled to be different depending on whether the first case is at the first position or at the second position.

Other features of embodiments of the present invention will become more apparent from consideration of the following detailed description of the embodiments taken in conjunction with the accompanying drawings.

### BRIEF DESCRIPTION OF THE DRAWINGS

FIG. 1 is a diagram showing an appearance of a mobile phone terminal apparatus 1 according to an embodiment of the present invention;
FIG. 2A shows the mobile phone terminal apparatus 1 in its state (in TV mode) having a display cabinet 11 rotated by an angle of 90° with respect to a main body 10 and FIG. 2B shows the same in its state (in game mode) with the display cabinet 11 rotated by an angle of 180° with respect to the main body 10;
FIG. 3 is a diagram showing a structure of a rotating hinge portion 30;
FIGs. 4A - 4C show appearances of the rotating hinge portion 30 assembled from parts shown in FIG. 3: FIG. 4A shows the hinge portion at a position of 0°, FIG. 4B shows the hinge portion at a position of 90°, and FIG. 4C shows the hinge portion at a position of 180°;
FIG. 5 is a block diagram showing an example of internal structure of the mobile phone terminal apparatus 1 according to an embodiment of the present invention;
FIGs. 6 A and B are drawings showing a mechanism for detecting the rotated position of the display cabinet 11;
FIG. 7 is a flowchart (1) explanatory of operations of the mobile phone terminal apparatus when its mode is changed upon turning of the display cabinet 11;
FIG. 8 is a flowchart (2) explanatory of operations of the mobile phone terminal apparatus when its mode is changed upon turning of the display cabinet 11;
FIG. 9 is a diagram showing a screen displayed when an incoming mail is received during TV mode or game mode; and
FIG. 10 is a diagram showing a screen displayed when an incoming call is received during TV mode or game mode.

### DETAILED DESCRIPTION OF THE PREFERRED EMBODIMENTS

With reference to the accompanying drawings, preferred embodiments of the present invention will be described with a mobile phone terminal taken as an example of the mobile information terminal apparatus.

### <Appearance of a mobile phone terminal>

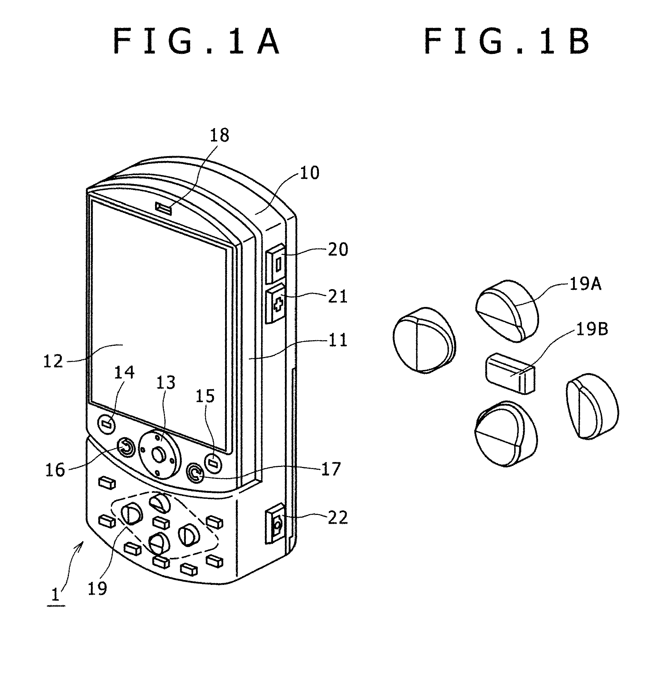

FIG. 1A shows an appearance of the mobile phone terminal 1 according to an embodiment of the present invention in its normally used state and FIG. 1B is an enlarged view of specific numeric keys (special numeric keys) as a part of the operating keys.

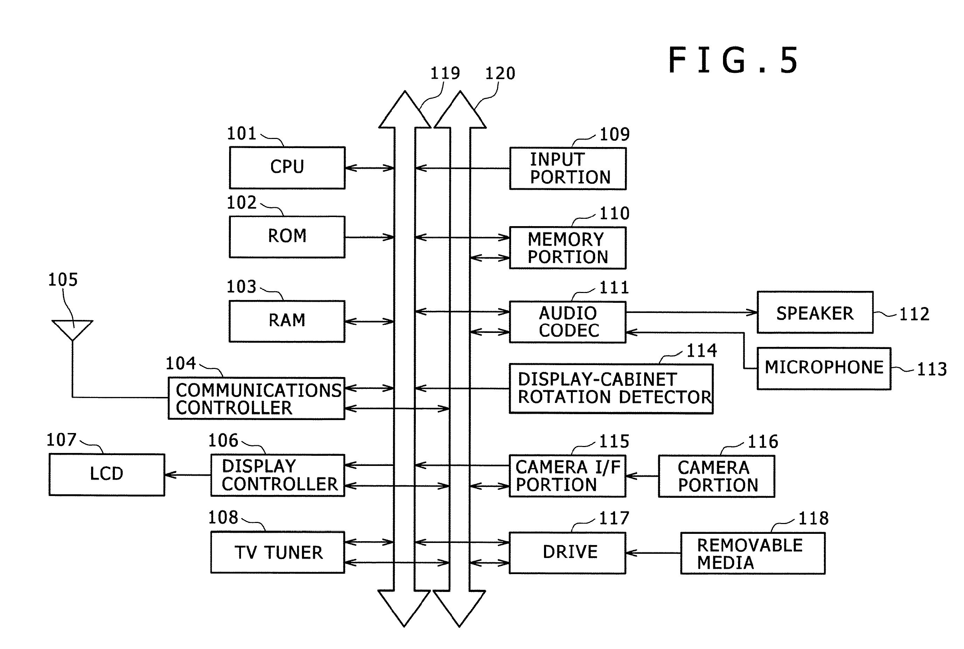

Referring to FIG. 1A, reference numeral 10 denotes a main body, which accommodates most of an electronic circuit having a later described block configuration (refer to FIG. 5). Reference numeral 11 denotes a display cabinet. The display cabinet 11 is adapted to rotate with respect to the main body 10 as discussed later and takes positions at an angle of 0°, 90°, and 180°. The display cabinet 11 has a display 12; a key group 13 of arrow keys and a decision key, a call start key 14, a call end key 15, a clear key 16, a cancel key 17, and a speaker for talking 18.

The display 12 is constituted for example of a color liquid crystal display and displays thereon a standby screen, a menu, or the like in the phone mode and displays thereon a created mail message or a received mail message in the electronic mail mode. Further, the display 12 displays thereon a received video image in the TV mode (at the position where the display cabinet 11 is rotated an angle of 90°) and displays thereon an image related to a game in the game mode (at the position of the display cabinet 11 rotated an angle of 180°).

Of the key group 13, the arrow keys are used, in the phone mode or mail mode (the normal mode), to scroll the menu screen displayed on the display 12 to select a desired menu item and the decision key is used to determine the selection. The call start key 14, if depressed when the user desires to make a call, enables a dial call, and the same key, if depressed when an incoming call is received, enables the user to converse over the phone. The call end key 15, if depressed when a call has come in, puts the call on hold, and if the key is depressed again, the call is disconnected. The call end key 15, if depressed at the end of a call, disconnects the call. The clear key 16 is a key to delete input numerals or characters, in a character-by-character basis, for example. The cancel key 17 is a key used to restore the initial screen.

The main body 10 has operating keys including a group of special numeric keys 19 disposed below the front face thereof and L keys for gaming 20 and 21 and an R key for gaming 22 disposed on one side face thereof. Incidentally, the L keys for gaming 20 and 21 function as zoom keys for the camera in the camera mode, whereas the R key for gaming 22 functions as a shutter key for the camera in the camera mode. The L keys for game/the zoom keys for camera 20, 21, as well as the R key for game/the shutter key for camera 22 are usable only in the game mode and the camera mode, i.e., they do not make any response if depressed in the normal mode.

The group of special numeric keys 19 are formed of four special numeric keys 19A disposed to surround one ordinary numeric key 19B (a numeric key "5") as shown in FIG. 1B. Here, the special numeric keys 19A are configured to be larger in size and higher in level than the ordinary numeric key 19B. In addition, the special numeric keys 19A have their keytops provided with a down slope portion toward the ordinary numeric key 19B. The above described arrangements are made because of the need for allowing the user, in the normal mode (the phone mode and mail mode), to depress each of the numeric keys 19A and the numeric key 19B as desired by the user and, further, because of the need for preventing the user, in the game mode, from erroneously depressing the other key than the special numeric keys 19A used as A, B, C, and D keys in the game mode. By virtue of the above described arrangements of the group of special numeric keys 19, the special numeric keys 19A may be easily depressed in the game mode without erroneously depressing the unusable ordinary numeric key 19B, and, further, in the phone and mail mode, the ordinary numeric key 19B may also be easily depressed without having finger caught by the special numeric keys 19A.

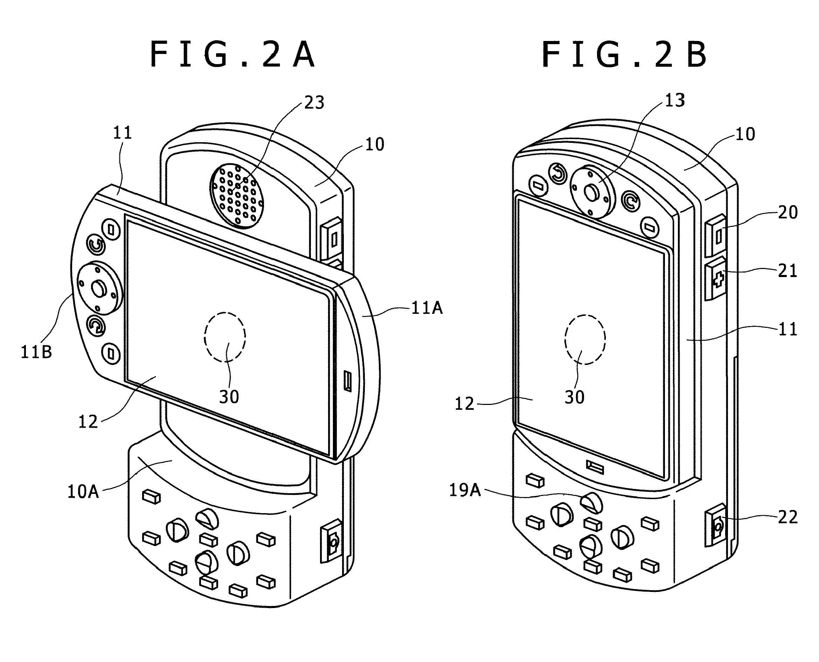

FIG. 2 shows the state of the apparatus with its display cabinet 11 rotated 90° with respect to the body 10 (FIG. 2A: TV mode) and with its display cabinet 11 rotated 180° with respect to the body 10 (FIG. 2B: game mode). When the display cabinet 11 is rotated 90° as shown in FIG. 2A, the mobile phone terminal 1 functions as a TV receiver. When the display cabinet 11 is rotated 180° as shown in FIG. 2B, the mobile phone terminal 1 functions as a game machine or a digital camera.

Referring to FIG. 2A, reference numeral 23 denotes an audio speaker for TV/game, which outputs audio related to a moving image displayed on the display 12 in synchronism with the moving image. Also on the back side of the body 10, there is provided an audio speaker for TV/game 27. The audio speaker for TV/game 23 is such that operates only in the game mode or TV mode and does not operate in the normal mode (when the rotated angle of the display cabinet 11 is 0°). (In the normal mode, the audio speaker for TV/game 27 plays a phone or mail melody.) On the other hand, the speaker for talking 18 is set so as not to operate in the TV mode or game mode. In the TV mode, the channel controlling is performed with the use of some of the numeric keys. Incidentally, in the TV mode, "*" key is assigned to the channel 10, "0" key is assigned to the channel 11, and "#" key is assigned to the channel 12. Volume control and brightness-color control may be made, for example, with the key group 13 of the arrowed keys and decision key operated on a display of menu.

In the game mode as shown in FIG. 2B (with the display cabinet 11 rotated 180°), the key group 13 of the arrowed keys and decision key, the four special numeric keys 19A, the L keys for gaming 20, 21, and the R key for gaming 22 are rendered valid (active) for playing a game. Other keys than those above (the numeric keys except the special numeric keys, for example) may be set to be invalid keys that do not respond if depressed.

The display cabinet 11 is arranged to be rotatable with respect to the body 10 by the use of the rotating hinge portion 30 (indicated by a dotted line in FIG. 2) with a later discussed configuration. A display-cabinet top face 11A and display-cabinet bottom face 11B, as well as a display-cabinet accommodating face 10A provided in the body 10, all have a circular arc shape and these circular arcs are concentric. Further, since the radius of curvature of the display-cabinet accommodating face 10A provided in the body 10 is formed to be slightly larger than the radius of curvature of the display-cabinet top face 11A and the display-cabinet bottom face 11B, the display cabinet 11 is allowed to rotate smoothly, without interfering with the display cabinet accommodating face 10A.

### <Mechanism for rotating the display>

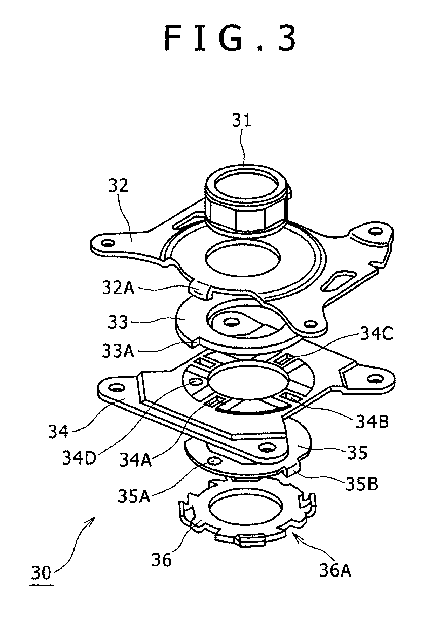

FIG. 3 is a diagram showing a structure of the rotating hinge portion 30. The rotating hinge portion 30 includes a pin 31, first plate 32, rotation stopper 33, second plate 34, spring member 35, and spring holder 36.

The pin 31 is inserted into the hollowed portions provided in each of the members in the order as indicated in FIG. 3. Here, the diameter of the pin 31 is merely slightly smaller than the diameter of the hollowed portions provided in each of the first plate 32, spring member 35, and spring holder 36. Therefore, by the insertion of the pin 31 into the hollowed portions of those members, the pin 31 is put into an integral relationship with the first plate 32, the spring member 35, and the spring holder 36. On the other hand, the diameters of the hollowed portions provided in the rotation stopper 33 and the second plate 34 are formed to be larger than the diameter of the pin 31 to such an extent that, when the rotating hinge portion 30 is attached to the mobile phone terminal 1, the rotation stopper 33 and the second plate 34 may not interfere with the pin 31, i.e., the rotation stopper 33 and the second plate 34 may smoothly make relative rotations to the pin 31.

The stopper 33 is securely fixed to the second plate by having a projection, not shown, provided on the rotation stopper 33 fitted into a rotation stopper fixing hole 34D provided in the second plate. Further, the rotation stopper 33 is provided with movement restricting portions 33A for restricting rotating movement of the first plate, at the positions of 0° and 180°. By abutting engagement of the projection 32A with the movement restricting portions 33A, the rotation of the first plate 32 is restricted between the angles of 0° and 180°.

In the second plate 34, there are provided small holed portions 34A, 34B, and 34C at the positions of 0°, 90°, and 180°, respectively.

The spring member 35 is accommodated into a spring holder 36. At this time, a lower projection 35B of the spring member 35 is brought into engagement with a cut portion 36A made in the spring holder 36. By this engagement and also by interference (friction) with the pin 31, the spring member 35 is restricted in its tangential movement (rotation). Further, the spring member 35 has an upper projection 35A which is upwardly convexed. By having the upper projection 35A put into the small holed portions 34A to 34C made in the second plate, the first plate 32 is click-stopped and stably located at the positions of 0°, 90°, and 180°, respectively. More specifically, the spring member 35 is a leaf spring slightly convexedly curved toward the side of the second plate 34 and is pushing up the second plate 34 at all times. Therefore, when the upper projection 35A is put into each of the small holed portions 34A to 34C in the second plate 34, a click sound is produced. Further, it is adapted such that the upper projection 35A may not come off the small holed portions 34A to 34C unless a force greater than a predetermined value is exerted to the first plate to rotate it.

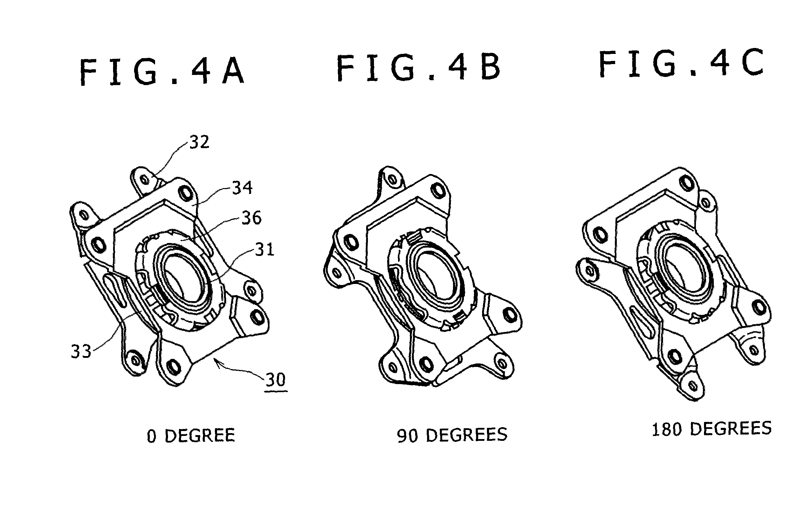

FIG. 4 shows appearances of the rotating hinge portion 30 completed by assembling the parts shown in FIG. 3, and specifically FIG. 4A shows a state of it at the position at an angle of 0°, FIG. 4B at the position at an angle of 90°, and FIG. 4C at the position at an angle of 180°. Further, the first plate 32 is securely fixed to the display cabinet 11, while the second plate 34 is securely fixed to the body 10. Thereby, the display cabinet 11 is enabled to take positions at angles of 0°, 90°, and 180° with respect to the body 10.

### <Hardware block structure>

FIG. 5 is a block diagram showing an example of internal structure of a mobile phone terminal 1 according to an embodiment of the present invention. Of the blocks shown here, the LCD 107 (corresponding to the display 12), a part of the input portion 109 (the key group 13 of the arrowed keys and decision key, the call start key 14, the call end key 15, the clear key 16, and the cancel key 17), and a part of the speaker 112 (the speaker for talking 18) are included in the display cabinet 11 and the rest are included in the body 10.

The CPU (Central Processing Unit) 101 develops control programs stored in the ROM (Read Only Memory) 102 onto the RAM (Random Access Memory) 103 and controls overall operations of the mobile phone terminal 1 via the control bus 119. When it is instructed by the user to prepare a document, for example, the CPU 101 starts a predetermined document processing program and controls the display controller 106 to display a document processing screen on the LCD 107. Further, the CPU 101 controls so that data necessary for executing various processes and the like may be stored in the RAM 103.

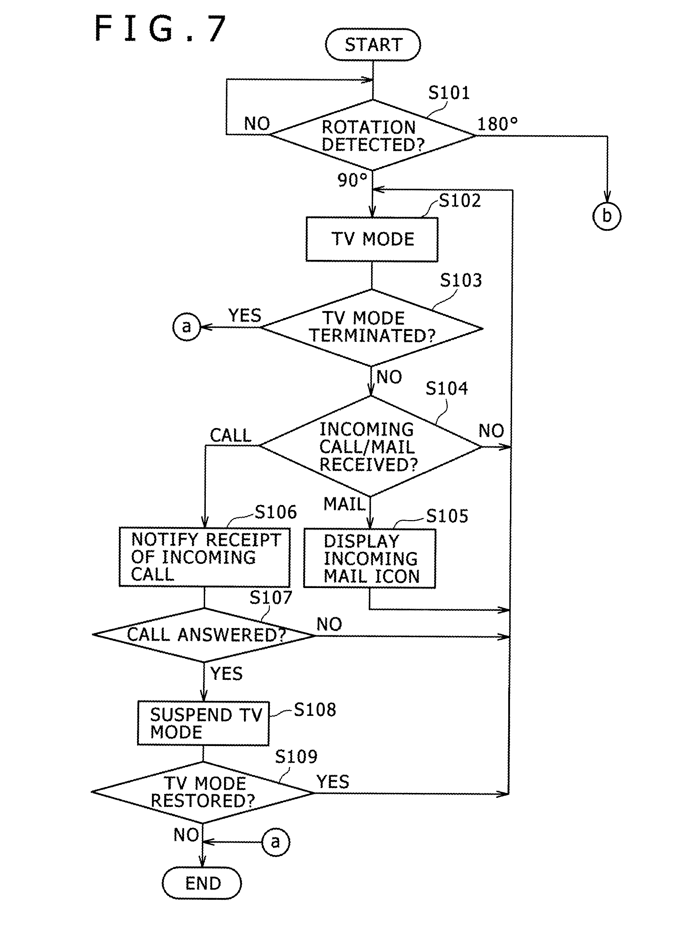

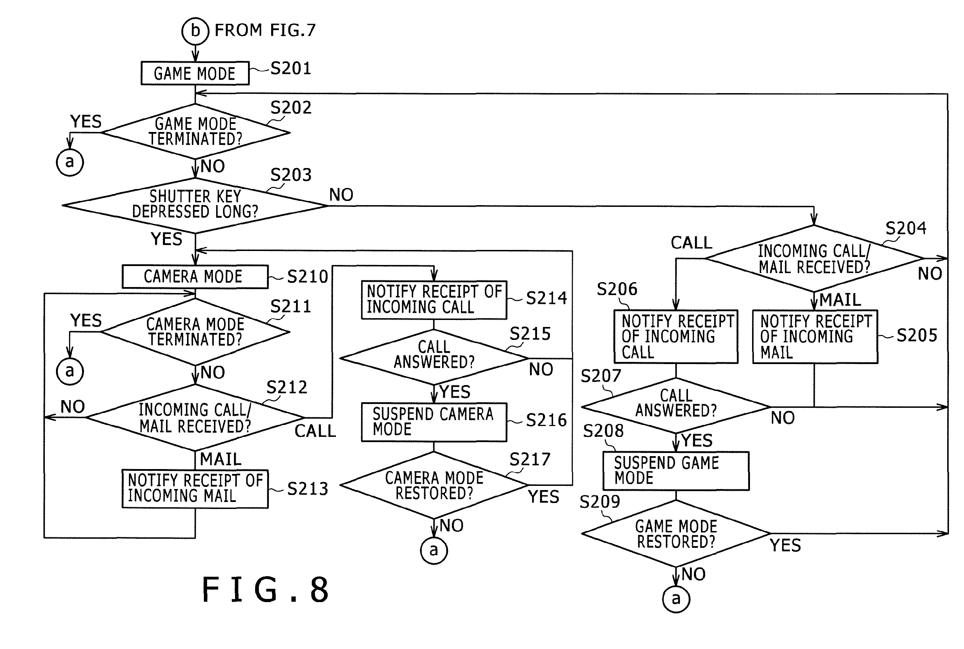

The ROM 102 at least stores control programs for performing the operations shown in the flowcharts of FIG. 7 and FIG. 8.

The communications controller 104 transfers radio wave data to and from a base station (not shown) via the antenna 105. In the normal mode, for example, it amplifies the RF (Radio Frequency) signal received via the antenna and performs such predetermined processes on the amplified signal as a frequency conversion process, an analog-digital conversion process, and a spectrum back-diffusion process. Thereafter, it outputs the thus obtained audio data to the audio codec 111. Further, the communications controller 104, upon receipt of supply of audio data from the audio codec 111, performs such predetermined processes on the audio data as a digital-analog conversion process, a frequency conversion process, and a spectrum diffusion process and, then, transmits the thus obtained audio signal from the antenna. Other than a communications controller for RF, such a communications controller for communicating with outside according to a communications protocol such as Bluetooth, wireless LAN (Local Area Network) 802.11, and WAP (Wireless Application Protocol) may be provided.

The display controller 106 controls display on the LCD 107 so that various types of information may be displayed thereon in text, image, and the like. The input portion 109 is made up of a keypad (numeric keys), the key group 13 of the arrowed keys and decision key, the L keys for game (the zoom keys for camera) 20 and 21, the R key for game (the shutter key for camera), and the like. The input portion 109 detects operations made by the user with such buttons and, when these buttons are depressed, it outputs the corresponding signals to the CPU 101.

The TV tuner 108 has a function as a tuner and also has a function as a demodulator and it tunes in on a station so as to receive a television broadcast RF signal (TV broadcast RF signal) of a predetermined frequency channel. The received TV broadcast RF signal is amplified and controlled by an AGC (Automatic Gain Control) to be brought to a suitable level and frequency-converted into an IF frequency. The TV tuner 108 may also be arranged to have the received signal band-limited by a filter, so that undesirable frequency components are eliminated, and, further, to have the IF signal converted into a base band signal, so that a video signal, an audio signal, and data information related to the broadcast program are extracted from the base band signal. The data information, for example, is data for text broadcasting and information representing broadcast programs such as EPG (Electronic Program Guide) information.

The storage portion 110 stores names and phone numbers, registered for example as an address book, an outgoing call record, an incoming call record, electronic mails sent and received, and the like.

The audio codec 111 converts audio data supplied from the communications controller 104 into an audio signal and outputs the corresponding audio signal from the speaker 112 (the speaker for talking 18 and audio speakers for TV/game 23, 27) . The audio codec 111 also converts audio of the user collected by the microphone 113 into audio data and outputs the audio data to the communications controller 104.

The display-cabinet rotation detector 114 detects the rotated angle of the display cabinet 11 by the use of a later described rotation detecting mechanism and informs the CPU 101 of the current angle of rotation via the control bus 119. Based on the received information about the rotated angle, the CPU 101 determines what the present mode is, i.e., whether it is the normal mode, TV mode, or game/camera mode.

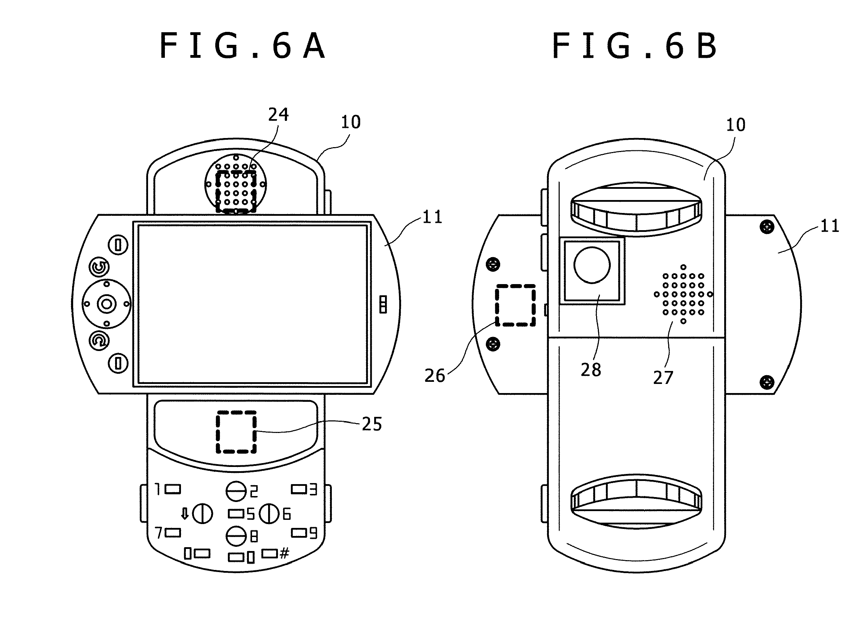

The camera portion 116 (the CCD camera 28 in FIG. 6, for example) captures an image of an object of shooting at a desired field angle and the camera interface (I/F) portion 115 sends the image data taken by the camera portion 116, through the control bus 119 and the display controller 106, to the LCD 107 so as to be displayed thereon. Then, by the user's depressing the camera shutter key 22, the displayed image can be stored into a nonvolatile memory (not shown) or the removable medium 118.

The CPU 101, ROM 102, RAM 103, communications controller 104, display controller 106, input portion 109, storage portion 110, audio codec 111, and camera I/F portion 115 are interconnected via the control bus 119. Further, the display controller 106, storage portion 110, audio codec 111, and camera I/F portion 115 are interconnected via the data bus 120.

According to need, the drive 117 is connected to the control bus 119, and the removable medium 118 such as a magnetic disk, optical disk, magnetooptical disk, or semiconductor memory is suitably attached to the drive 117. As the need arises, a computer program read out from such a medium is installed into the mobile phone terminal 1.

### <Detecting function of the rotation of the display cabinet 11>

FIG. 6 is a diagram showing a mechanism for detecting the rotational position of the display cabinet 11.

Referring to FIG. 6, the body 10 has magnets 24 and 25 disposed at the rotational positions of the display cabinet 11 at 0° and 180°, respectively. Further, at a position on the back side of the display cabinet 11, corresponding to the speaker for talking 18, there is provided a magnetosensor 26. The magnets 24 and 25 and magnetosensor 26 are parts corresponding to the display-cabinet rotation detector 114 in FIG. 5. The magnetosensor 26 is adapted to substantially face the magnet 24 when the display cabinet 11 is at the 0° position and to substantially face the magnet 25 when the display cabinet 11 is at the180° position.

When the magnetosensor 26 senses the magnetic force of the magnet 24, it is determined that the display cabinet 11 is at the 0° position, and when the same senses the magnetic force of the magnet 25, it is determined that the display cabinet 11 is at the 180° position. Further, when the magnetosensor 26 detects no magnetic force, it is determined that the display cabinet 11 is at the 90° position.

Although the rotation of the display cabinet 11 is detected by the use of a magnetosensor means in the case of the present embodiment, it is not limitative but it may be detected by the use of an electrical or mechanical sensing means.

### <Operations performed following rotation of the display cabinet 11>

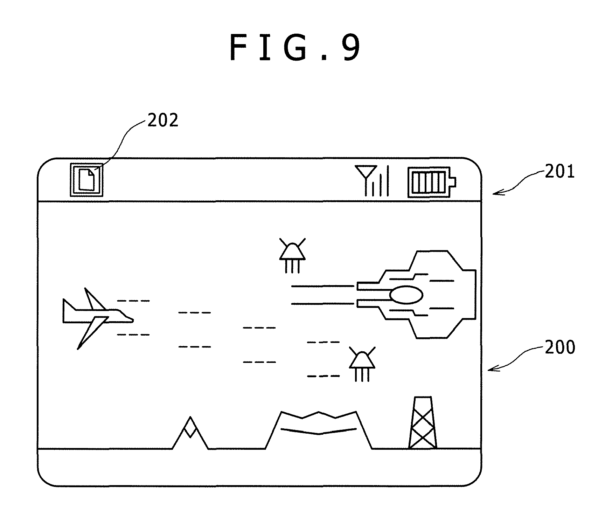

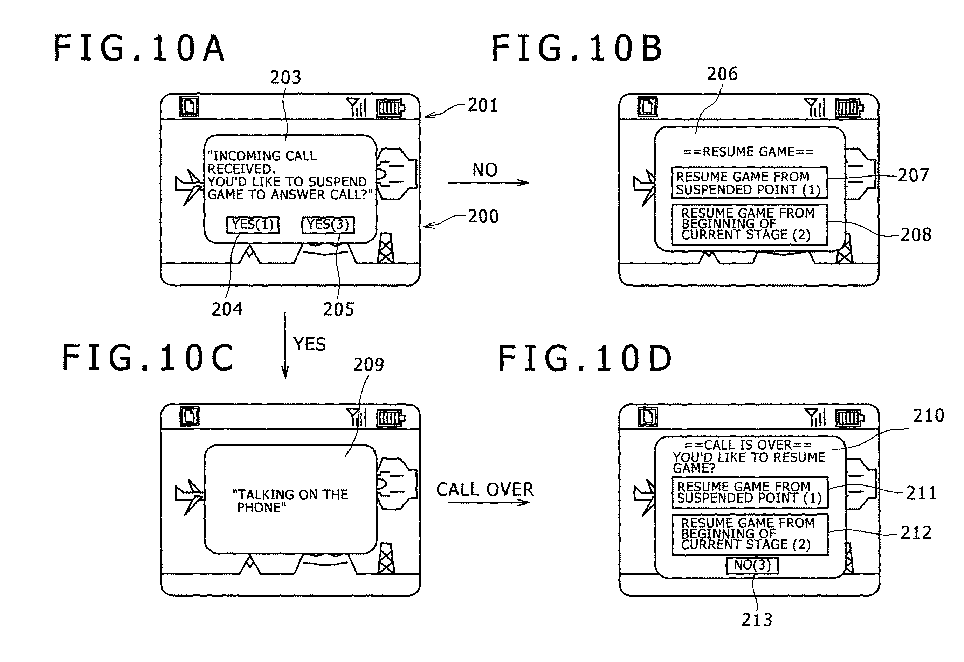

FIG. 7 and FIG. 8 are flowcharts explanatory of operations performed following rotation of the display cabinet 11 to change the operating mode. FIG. 9 shows a screen display at the time when a mail has been received while the apparatus is in the TV mode or game mode, and FIG. 10 shows a screen display at the time when a call has come in while the apparatus is in the TV mode or game mode. Unless specifically noted, the agent that controls processing of operations in the flowcharts is the CPU 101.

Referring to FIG. 7, the mobile phone terminal 1 at first is in the normal mode, namely, in the mode capable of calling and mailing.

At step S101, it is detected whether the display cabinet 11 has rotated. If no rotation of the display cabinet 11 has been detected, the mobile phone terminal 1 remains in the normal mode. When a rotation of 90° has been detected, processing proceeds to step S102, where the mode is shifted to the TV mode and, when a rotation of 180° has been detected, processing proceeds to step S201 (FIG. 8), where the step is shifted to the game mode.

In the TV mode at step S102, the mobile phone terminal 1 is in the state as shown in FIG. 2A and the user using the mobile phone terminal 1 can see an incoming call screen displayed on the display 12.

At step S103, it is determined whether termination of the TV mode is instructed by the user. The TV mode is terminated when, for example, the user has returned the display cabinet 11 to the position at an angle of 0°. When the TV mode is to be continued, processing proceeds to step S104.

At step S104, it is determined whether an incoming call or electronic mail is received. If neither of them is received, processing returns to step S102, where the TV mode is continued. When an electronic mail is received, processing proceeds to step S105, where arrival of the mail is notified. More specifically, a TV image is displayed in the image displaying area 200 of the display 12 as shown in FIG. 9 and the incoming-mail icon 202 is displayed in the state displaying area 201. Thereby, the user is enabled to recognize that an electronic mail is received. When an electronic mail is received, the operation in the TV mode is not suspended, unlike in the case where a phone call is received as discussed later. Processing then returns to step S102. If the user desires to read the mail, the user may read it, for example, by returning the display cabinet 11 to the position of 0° thereby returning the operating mode to the normal mode.

If arrival of an incoming call is determined at step S104, processing proceeds to step S106. At step S106, an incoming call notifying display 203, in a pop-up display, is superimposed on the TV image displayed in the display area 200 as shown in FIG. 10A.

Then, at step S107, it is determined whether the user has answered the phone. More specifically, if the user has selected the NO display 205 in the incoming call notifying display 203 (by depressing the numeric key "3", for example), processing returns to step S102. On the other hand, if the user has selected the YES display 204 in the incoming call notifying display 203 (by depressing the numeric key "1", for example) and returns the display cabinet 11 to the position at an angle of 0°, the user is enabled to answer the phone. In this case, processing proceeds to step S108 and, thereby, the TV mode is suspended and a 'talking on the phone' display 209 in a pop-up display is superimposed on the image in the image display area 200 (as shown in FIG. 10C, for example). Incidentally, it may also be arranged such that a call is started in the case of the TV mode where the incoming call notifying display 203 is displayed (FIG. 10A), not by selecting the YES display, but by merely returning the display cabinet 11 to the position at an angle of 0°. It is because, in the case of viewing TV, it is not necessary to care too much about "suspension," unlike in the case of playing a game. However, in the case of a video program, for example, causing "suspension" is desirable and therefore it is preferred that displaying is carried out in the sequence of FIG. 10A and FIG. 10C.

At step S109, it is determined whether the user has selected returning to the TV mode. More specifically, if the user after finishing a call rotates the display cabinet 11 to the position at an angle of 90°, the previous TV mode is restored (step S102). If user takes no action, the mode remains in the normal mode and processing is ended.

When it has been determined that the angle of rotation of the display cabinet 11 is 180° at step S101, processing enters step S201, where the mode is shifted to the game mode. In the game mode, as shown in FIG. 2B, the user may rotate the mobile phone terminal 1 to the landscape orientation and grasp its both ends by both hands, with the right thumb placed in the position ready for operating the special numeric keys 19A and the left thumb for operating the key group 13 of the arrowed keys and decision key, and with the right forefinger placed in the position ready for operating the R key for gaming 22 and the left forefinger for operating the L keys for gaming 20 and 21. At this time, a screen for gaming is displayed in the image displaying area 200 of the display 12.

At step S202, it is determined whether or not it has been instructed by the user to terminate the game mode. For example, the game mode is terminated when the user rotates the display cabinet 11 to the position at an angle of 0° or 90°. If the game mode is to be continued, processing proceeds to step S203.

At step S203, it is determined whether the shutter key (R key for gaming) 22 has been depressed for a predetermined long period of time. When it is determined that the key has been depressed a long time, processing proceeds to step S210, where the mode is shifted to the camera mode. However, when the key has not been depressed a long time, the game mode is continued and processing goes into step S204. Incidentally, the key that is depressed a long time for shifting the mode to the camera mode needs not necessarily be the shutter key. Any key that is so determined in advance may be used.

At the step S204, it is determined whether an incoming call or an electronic mail is received. If neither of them is received, processing returns to step S201 so that the game mode is continued. When an electronic mail has been received, processing proceeds to step S205, where the incoming-mail icon 202 is displayed in the state displaying area 201 as shown in FIG. 9 to notify the user of the arrival of the mail. Thus the user is enabled to recognize that an electronic mail is received even while playing a game. In the case of receipt of an electronic mail, the operation of the game mode is not suspended, unlike in the case of incoming call, which will discussed later, and processing returns to step S202. It may also be arranged such that, if the user wishes to read the mail, he or she can do so after returning to the normal mode by, for example, rotating the display cabinet 11 to the position at an angle of 0°.

When it is determined that an incoming call is received at step S204, processing proceeds to step S206. At step S206, an incoming call notifying display 203, in a pop-up display, is superimposed on the image for game displayed in the display area 200 as shown in FIG. 10A.

Then, at step S207, it is determined whether the user has answered the call. More specifically, if the user has selected the NO display 205 in the incoming call notifying display 203 (by depressing the numeric key "3", for example), the game is resumed. At this time, a resuming instructing display 206 in a pop-up display is displayed in the image displaying area 200 as shown in FIG. 10B. The resuming instructing display 206 is arranged to provide two choices to select between: a selecting display 207 (the numeric key"1") indicating to resume the game from the point where it was suspended and another selecting display 208 (the numeric key "2") indicating to resume the game from the beginning of the present stage. By selecting either of the two choices, the user can return to the game mode. Here, the reason for providing the choice to "resume from the beginning of the present stage" is that it sometimes occurs, if the game is resumed from the point where it was suspended, that the user cannot catch up with the rapid movements of the game in the case, for example, of a shooting game constituted of a plurality of stages. Hence, it is allowed for the user to select the choice to start from the beginning of the suspended stage.

On the other hand, if the user selects the YES display 204 in the incoming call notifying display 203 (by depressing the numeric key "1", for example) and returns the display cabinet 11 to the position at an angle of 0°, the user is enabled to answer the phone. At this time, processing proceeds to step S208, where the game mode is suspended, and a 'talking on the phone' display 209, in a pop-up display, is superimposed on the image in the image display area 200 as shown in FIG. 10C.

At step S209, a standby state waiting for inputting of an instruction as to whether the game is resumed or not is established. At this time, a call termination notification/resuming instructing display 210 is displayed in the image display area 200 as shown FIG. 10D. The call termination notification/resuming instructing display 210 is arranged to provide three choices to select among: a selecting display 211 (the numeric key"1") indicating to resume the game from the point where it was suspended, a selecting display 212 (the numeric key "2") indicating to resume the game from the beginning of the stage that was suspended in a case where, for example, the game is constituted of a plurality of stages, and a selecting display 213 (the numeric key "3") to terminate the game without resuming. When the user selects the selecting display 211 or 212, processing returns to step S201 (game mode) and when the selecting display 213 is selected, processing is ended.

When, at step S203, it is detected that the user has depressed the shutter key for a predetermined long period of time, processing proceeds to step S210, where the mode is shifted to the camera mode. In the camera mode, the user is enabled to use the mobile phone terminal 1 as a digital camera. In the camera mode, as described above, the image of the subject captured by the CCD camera 28 shown in FIG. 6 is displayed in the image displaying area 200.

At step S211, it is determined whether the user has given an instruction to terminate the camera mode. The camera mode may, for example, be terminated by returning the display cabinet 11 to the position at an angle of 0°. Incidentally, it may also be arranged such that the mode returns to the game mode by, for example, having the shutter key 22 depressed a long time again. If the instruction to terminate the camera mode is not issued, processing proceeds to step S212, where it is determined whether an incoming call or an electronic mail is received. If neither of them is received, processing returns to step S210 to continue the camera mode. When an electronic mail is received, processing proceeds to step S213, where the incoming-mail icon 202 is displayed in the state displaying area 201 as shown in FIG. 9 to notify the user of the arrival of the mail. Thus the user is enabled to recognize that an electronic mail is received even while operating the camera. Then, processing returns to step S211. It may also be arranged such that, if the user wishes to read the mail, he or she can do so after returning to the normal mode by, for example, rotating the display cabinet 11 to the position at an angle of 0°.

When it is determined at step S212 that an incoming call is received, processing proceeds to step S214. At step S214, the arrival of the incoming call is notified to the user by, for example, an ordinary ringer or vibration. Of course, the arrival of the incoming call may also be notified by a pop-up display the same as in the case of the TV mode or game mode

At step S215, if it is determined that the user has answered the call (with the display cabinet 11 at the position at 0°), the camera mode may be suspended. In the case where the user have not answered the call or refused to answer the call, the camera mode may be continued (step S210).

At step S217, it is determined whether or not the camera mode is restored. In a case where an incoming call was received during the camera mode and the call was answered, and, then, the talking on the phone has been finished, such an alteration may also be made to allow the camera mode to be restored only by rotation by the user of the display cabinet 11 to the 180° position. While the display cabinet 11 is rotated from the position at an angle of 0° to that of 180° when the camera mode is to be restored, the game mode is set to have a higher priority than the camera mode. Hence, in order to restore the camera mode, the shutter key 22 has to be depressed for a long time again, which is unbearable trouble for the user. This is the reason why the above described alteration is considered beneficial. When the camera mode is not to be restored (this is determined, for example, by an ending instruction from the user or an elapse of time after the completion of the phone talk, processing is ended.

Although the game mode in the present embodiment has been set to have a higher priority than the camera mode, the setting may of course be reversed.

The present embodiment is arranged, when an incoming call is received during the TV mode or game mode, such that the arrival of the incoming call is notified with the TV program or game playing suspended. However, such an arrangement may also be made that the user, by having an answer phone mode set up in advance, can continuously enjoy the TV program or game playing without causing it to be suspended.

### <Advantages of the embodiments>

According to an embodiment of the present invention, the operating mode of the mobile phone terminal 1 is arranged to be changed by rotation of the display cabinet 11. Therefore, the need for the user to have menus displayed each time to choose a desired mode therefrom is eliminated and thus a user friendly mobile phone terminal supporting entertainment functions can be provided.

Further, by arranging the terminal to function as a mobile gaming machine by having the display cabinet 11 rotated by an angle of 180°, the terminal can provide a screen display in a landscape orientation and enables the keys to be operated with the machine held by both hands, the same as in the case of general mobile gaming machines. Thus, stabilized operability and improved usability of the apparatus can be realized. Since, further, the outer shape of the mobile phone terminal 1 is not changed so much before and after the 180° rotation, it is excellent in terms of design.

Further, in the normal mode (with the display cabinet 11 at the position at an angle of 0°), the terminal provides its screen in a portrait orientation and its operating keys for use in a mobile phone mode arranged in the same configuration as in the general mobile phone terminals. Hence, the user is enabled to use the phone call and electronic mail function by holding the terminal by one hand. Accordingly, the user can use the mobile phone terminal 1 without feeling any sense of discomfort.

Further, since each operating key is provided with different functions for different modes, one mobile phone terminal can achieve multiple functions. Further, since capability to support various functions is allocated to each numeric key, the need for providing excessive keys is eliminated. Accordingly, the mobile phone terminal can be made small.

When an incoming call or electronic mail is received while the mobile phone terminal is being used as a TV receiver or gaming machine, the arrival of the call or mail is arranged to be notified to the user. Hence, the user can respond to it at once.

### <Other exemplary embodiments>

Further, by providing a USB port (not shown) on the mobile phone terminal 1, the terminal may be connected to a home game machine such as PlayStation (Trademark of Sony Computer Entertainment Inc.). Then, the mobile phone terminal 1 may also be used as a controller for the home game machine. At this time, if both of the apparatuses are connected together by a USB cable, two-way communications may be made between both the apparatuses and, by initializing the mobile phone terminal 1, it may also be used as a dedicated controller.

The present invention may also be attained by providing a system or apparatus with a recording medium in which the program code of software to achieve the function of the preferred embodiment is stored and by having the program code stored in the recording medium read and executed by a computer (or CPU or MPU) of the system or apparatus. In this case, the program code, read out from the recording medium, itself realizes the function of the above referred embodiment. Accordingly, the recording medium storing the program code therein can be considered to constitute the present invention. The recording media used for storing such a program code include, for example, floppy (Registered Trademark) disk, hard disk, optical disk, magnetooptical disk, CD-ROM, CD-R, magnetic tape, nonvolatile memory card, and ROM.

The function of the above referred embodiment is realized not only by the computer reading out and executing the program code. The OS (operating system) and the like, operating on the computer, perform part or the entirety of actual processing based on the instructions set forth in the program code, and also by this processing is realized the function of the above referred embodiment; this processing may be included in the invention.

Further, there may be a case where the program code read out from the recording medium is written into a memory attached to a function enhancement board inserted in a computer or a function enhancement unit connected to the computer and, thereafter, a CPU or the like provided in the function enhancement board or function enhancement unit performs part or the entirety of actual processing based on the instruction set force in the program code, and thus the function of the above referred embodiment is achieved by the above described processing. Such a case may also be included in the invention.

Further, by having the program code of the software achieving the function of the above referred embodiment delivered through a network, the program may be stored into a memory unit such as a hard disk unit or a memory or a storage medium such as CD-RW, CD-R, or the like of a system or apparatus. Then, the computer (or the CPU or MPU) of the system or apparatus may read and execute the program code stored in the memory unit or storage medium; also through such processing, the present invention can obviously be achieved.

It should be understood by those skilled in the art that various modifications, combinations, sub-combinations and alterations may occur depending on design requirements and other factors insofar as they are within the scope of the appended claims or the equivalents thereof.

## Claims

1. A mobile information terminal apparatus (1) comprising:
a first case (11) including a display portion (12);
a second case (10); and
a rotary support mechanism (30) for supporting said first case and said second case such that said first case (11) is horizontally rotatable with respect to said second case (10) and said first case (11) takes at least a first position and a second position different from the first position, wherein
shapes of said mobile information terminal apparatus (1) at the first position and the second position are substantially identical.

2. The mobile information terminal apparatus (1) according to claim 1, wherein
said first case (11) has a part of operating keys of said mobile information terminal apparatus (1),
when said first case (11) is at the second position, the part of the operating keys and the rest of the operating keys are respectively disposed at both left and right end portions in longitudinal direction of said mobile information terminal apparatus (1) so that said mobile information terminal apparatus can be operated by both hands.

3. The mobile information terminal apparatus (1) according to claim 1 or 2, further comprising:
a position detector (114) for detecting a position of said first case, and
a controller (101) for controlling functions of said mobile information terminal apparatus depending on results of detection by said position detector, wherein
said controller (101) changes the function of said mobile information terminal apparatus (1) depending on whether said first case is at the first position or at the second position.

4. The mobile information terminal apparatus (1) according to claim 3, wherein
said rotary support mechanism (30) allows said first case (11) to take a third position located between the first and second positions; and
said controller (101) changes the function of said mobile information terminal apparatus (1) depending on whether said first case (11) is at the first position, at the second position, or at the third position.

5. The mobile information terminal apparatus (1) according to claim 3 or 4, wherein
said controller (101) provides phone and/or electronic mail function when said first case (11) is at the first position, and
said controller (101) provides game and/or camera function when said first case (11) is at the second position.

6. The mobile information terminal apparatus (1) according to claim 3, 4 or 5, wherein
said controller (101) provides TV or video function when said first case is at the third position.

7. The mobile information terminal apparatus (1) according to one of the claims 3 to 6, wherein
at least numeric keys including 0 to 9 are disposed on said second case (10) and at least arrow keys and a decision key are disposed on said first cabinet, and wherein
said controller (101) changes the roles of said numeric keys, said arrow keys, and the decision key depending on the position of said first case.

8. The mobile information terminal apparatus (1) according to claim 7, wherein
the numeric keys are made up of ordinary numeric keys and special numeric keys and the special numeric key is configured to be larger and higher than the ordinary key.

9. The mobile information terminal apparatus (1) according to claim 8, wherein
the special numeric keys are arranged to surround at least one ordinary numeric key and have their keytops provided with a down slope portion toward the surrounded ordinary numeric key.

10. The mobile information terminal apparatus (1) according to claim 5, wherein
when said first case (11) is at the second position capable of responding to both of the game and camera functions, the controller switches between the game function and the camera function depending on whether or not a predetermined key has been depressed for a long time.

11. The mobile information terminal apparatus (1) according to claim 10, wherein
a zoom key for use in a mode of performing the camera function is used as an L key for gaming in a mode of performing the game function and a shutter key for use in the mode of performing the camera function is used as an R key for gaming in the mode of performing the game function.

12. A method of controlling a mobile information terminal apparatus, wherein
said mobile information terminal apparatus includes a first case having a display portion, a second case, a rotary support mechanism for supporting said first case and second case such that said first case is horizontally rotatable with respect to said second case and said first case takes at least a first position and a second position different from the first position and, wherein
shapes of said mobile information terminal apparatus at the first position and in the second position are substantially identical,
the method of controlling said mobile information terminal apparatus comprising the steps of:
detecting the position of said first case; and
controlling functioning of said mobile information terminal apparatus depending on results of the detection in the step of detecting the position, wherein
at said controlling step, functioning of said mobile information terminal apparatus is controlled to be different depending on whether said first case is at the first position or at the second position.
